# EUROPÄISCHE PATENTSCHRIFT

(11) **EP 1 723 928 B1**
(45) Veröffentlichungstag und Bekanntmachung des Hinweises auf die Patenterteilung: **20.10.2010**
(21) Anmeldenummer: 06000878.6
(22) Anmeldetag: 17.01.2006
(51) Int. Cl.: A61C 19/00, A47L 9/22, A47L 9/28

(54) **Zahntechnikabsaugvorrichtung**
Dental suction device
Dispositif d'aspiration dentaire

(30) Priorität: 19.05.2005 DE 202005007823 U
(43) Veröffentlichungstag der Anmeldung: 22.11.2006
(60) Teilanmeldung: 07010328.8
(73) Patentinhaber: Renfert GmbH, 78247 Hilzingen (DE)
(72) Erfinder: Rieger, Sören Dr., 78247 Hilzingen (DE)
(74) Vertreter: Daub, Thomas

(56) Entgegenhaltungen:
- WO-A-02/069776
- GB-A- 2 082 351

## Beschreibung

### Stand der Technik

Die Erfindung geht aus von einer Zahntechnikabsaugvorrichtung nach dem Oberbegriff des Anspruchs 1.

Eine Staubsaugvorrichtung mit entsprechenden Merkmalen aus dem Oberbegriff des Anspruchs 1 ist aus der WO-A-02/069 776 bekannt.

Es sind ferner Dentalabsaugvorrichtungen mit einer Motoreinheit zum Antrieb eines von einem Turbinenrad gebildeten Absaugmittels bekannt. Insbesondere Dentalabsaugvorrichtungen, und zwar speziell Zahntechnikdentalabsaugvorrichtungen, werden über einen Arbeitstag nahezu im Dauereinsatz betrieben.

Der Erfindung liegt insbesondere die Aufgabe zugrunde, eine kostenreduzierte Absaugvorrichtung bereitzustellen, die vorzugsweise dazu geeignet ist, zumindest nahezu im Dauereinsatz betrieben werden zu können. Sie wird gemäß der Erfindung durch die Merkmale des unabhängigen Patentansprüches gelöst. Weitere Ausgestaltungen ergeben sich aus den Unteransprüchen.

### Vorteile der Erfindung

Die Erfindung geht aus von einer Zahntechnikabsaugvorrichtung mit wenigstens einer Motoreinheit zum Antrieb eines Saugmittels.

Die Motoreinheit ist als eine von einem Endverbraucher austauschbare Einheit vorgesehen. Unter "vorgesehen" soll dabei insbesondere speziell "ausgestattet" und/oder "ausgelegt" verstanden werden. Ferner soll unter einer "von einem Endverbraucher austauschbaren Einheit" insbesondere eine Einheit verstanden werden, die unter Erfüllung zumindest einzelner und vorzugsweise sämtlicher Sicherheitsvorschriften des Produktions- und/oder Auslieferlands, wie insbesondere der Sicherheitsvorschriften der DIN, wie beispielsweise der DIN EN 61010-1, ausgetauscht werden kann. Durch eine entsprechende erfindungsgemäße Ausgestaltung können besonders kostengünstige Motoren, wie insbesondere Kollektormotoren, eingesetzt und damit Kosten eingespart werden.

Die Motoreinheit umfasst ein Kunststoffgehäuse und einen im Gehäuse angeordneten Elektromotor. Mit dem Gehäuse kann ein vorteilhafter Schutz, und zwar insbesondere ein vorteilhafter Berührschutz, erreicht werden, wie dieser vorzugsweise gemäß DIN, beispielsweise gemäß DIN EN 61010-1, definiert ist, bzw. es kann eine Berührbarkeit von "gefährlich aktiven Teilen" nach der DIN EN 61010-1 sicher verhindert werden.

Das Gehäuse ist aus Kunststoff, wodurch ein besonders kostengünstiges, einen vorteilhaften Berührschutz, insbesondere gegen elektrische Spannungen, bietendes Gehäuse erzielt werden kann.

Gemäß der Erfindung weist die Absaugvorrichtung eine Motorlagereinheit mit einem Steckaufnahmebereich auf, wodurch eine besonders einfache und schnelle Montage und Demontage sowie Zentrierung der Motoreinheit erreicht werden können. Dabei soll unter einem "Steckaufnahmebereich" insbesondere ein Bereich verstanden werden, in oder auf den die Motoreinheit bei der Montage gesteckt und damit zumindest teilweise in ihrer Lage gesichert werden kann.

Ferner wird vorgeschlagen, dass die Absaugvorrichtung wenigstens ein Befestigungsmittel umfasst, das zur werkzeuglosen Befestigung der Motoreinheit vorgesehen ist, wodurch insbesondere der Aufwand der Montage und Demontage reduziert werden kann.

Da die Absaugvorrichtung eine einen Berührschutz gewährleistende Steckverbindung zur Energieversorgung der Motoreinheit umfasst, kann konstruktiv einfach ein gewünschter Schutz erreicht werden, und es kann eine komfortable Montage und Demontage sichergestellt werden.

Ferner wird der Komfort der Montage und Demontage weiter gesteigert und die Kosten weiter reduziert , da die Motoreinheit ein einen Berührschutz gewährleistendes Elektrokabel und ein daran befestigtes Steckmittel der Steckverbindung aufweist. Grundsätzlich könnte jedoch auch ein Steckmittel an das Gehäuse der Motoreinheit zumindest teilweise angeformt und/oder unmittelbar an diesem befestigt sein.

Ist in der Motoreinheit das Saugmittel integriert, wie beispielsweise ein Turbinenrad, eine Pumpe usw., kann eine aufwendige An- und Abkopplung der Motoreinheit an das Saugmittel bei der Montage und Demontage durch den Endverbraucher vermieden werden, und es kann eine kostengünstige Gesamteinheit erreicht werden.

Ferner wird vorgeschlagen, dass die Absaugvorrichtung eine einen Kleinlüfter umfassende Strömungsmessvorrichtung aufweist. Dabei soll unter einem Kleinlüfter insbesondere eine Einheit mit einer Antriebseinheit und einem Lüftermittel verstanden werden. Kleinlüfter werden in hohen Stückzahlen mit einem hohen Automatisierungsgrad hergestellt, und zwar insbesondere für die Elektronikindustrie, wie beispielsweise zur Kühlung von CPUs in Personal Computern (PC), und sind dadurch besonders kostengünstig erhältlich. Aufgrund dessen werden vorzugsweise zum Einsatz in PCs vorgesehene Kleinlüfter eingesetzt. Ferner kann an der Antriebseinheit eines Kleinlüfters vorteilhaft ein Signal für eine Strömungsmessung, insbesondere zur Messung einer Strömungsgeschwindigkeit, abgegriffen werden.

Ist der Kleinlüfter in zumindest einem Betriebsmodus angetrieben, kann stets ein vorteilhaftes Signal abgegriffen werden, auch wenn beispielsweise keine Strömung in einem Hauptkanal strömt. Ferner kann insbesondere die Antriebseinheit für einen Selbsttest genutzt werden.

In einer weiteren Ausgestaltung wird vorgeschlagen, dass der Kleinlüfter teilweise von einer Hauptströmung abgeschirmt ist, beispielsweise indem dieser nur teilweise in einen Hauptströmungskanal ragt und/oder teilweise von einem Abschirmmittel abgedeckt ist, wodurch ein auf den Kleinlüfter treffender Strömungsanteil vorteilhaft abgestimmt werden kann.

Ist der Kleinlüfter in einer Motorlagereinheit angeordnet, können zusätzliche Lagermittel, Montageaufwand, Bauraum und Kosten eingespart werden.

Die erfindungsgemäße Lösung kann bei Zahntechnikabsaugvorrichtungen eingesetzt werden, und zwar insbesondere aufgrund des Betriebs derartiger Vorrichtungen nahezu im Dauereinsatz.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Zahntechnikabsaugvorrichtung in einer Seitenansicht mit einer teilweise ausgeblendeten Seitenwand,
- Fig. 2: eine räumliche Darstellung der Zahntechnikabsaugvorrichtung mit ausgeblendeten Teilen,
- Fig. 3: einen Querschnitt durch die Zahntechnikabsaugvorrichtung,
- Fig. 4: die Zahntechnikabsaugvorrichtung schräg von hinten bei der Montage einer Motoreinheit,
- Fig. 5: einen vergrößerten Ausschnitt der Zahntechnikabsaugvorrichtung von hinten und
- Fig. 6: einen vergrößerten Ausschnitt des Querschnitts aus Figur 3.

### Beschreibung des Ausführungsbeispiels

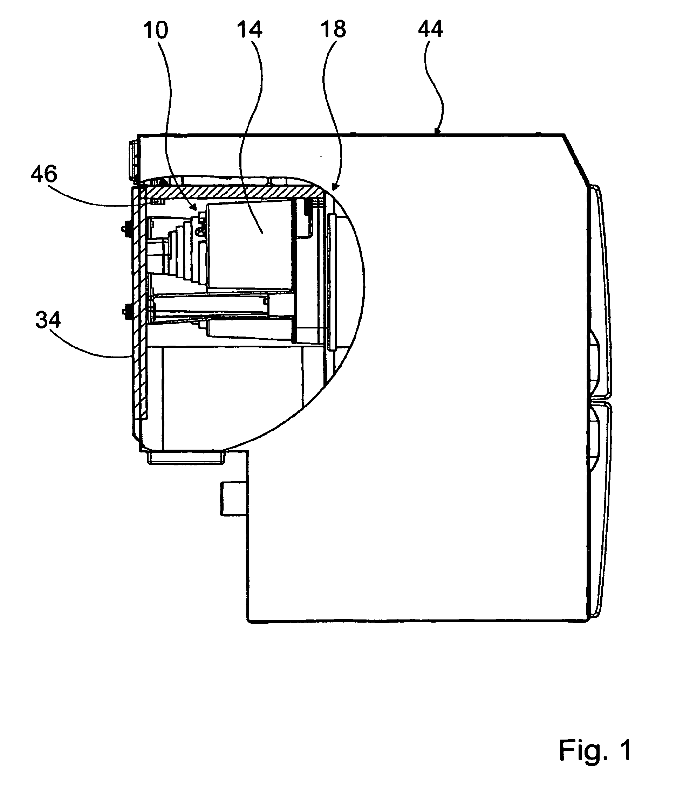

Figur 1 zeigt eine als Untertischgerät ausgebildete Zahntechnikabsaugvorrichtung in einer Seitenansicht mit einer teilweise ausgeblendeten Seitenwand. Die Zahntechnikabsaugvorrichtung ist zum Einsatz in einem Zahntechniklabor vorgesehen und weist in einem Vorrichtungsgehäuse 44 eine Motoreinheit 10 zum Antrieb eines in der Motoreinheit 10 integrierten, von einem Turbinenrad gebildeten Saugmittels 12 auf (Figuren 1, 3 und 6).

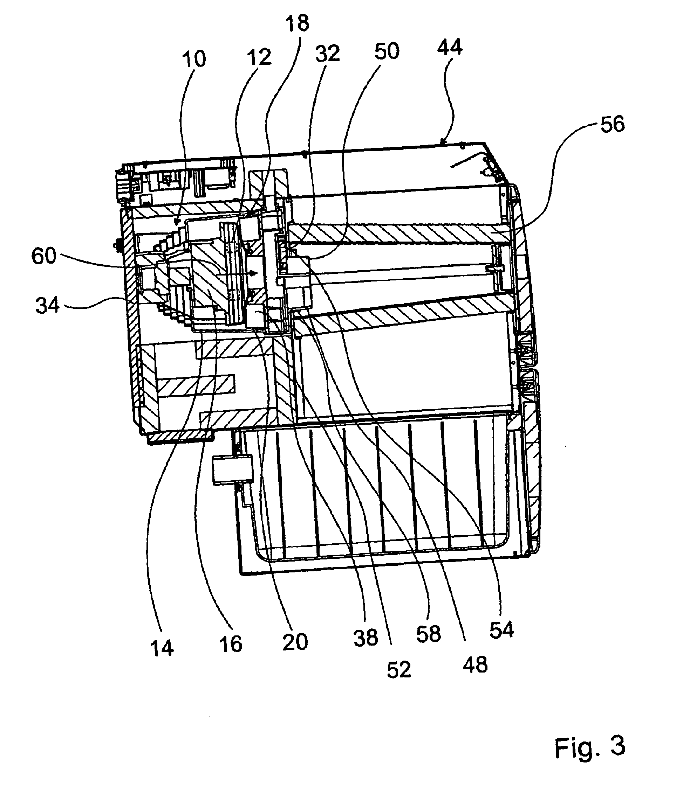

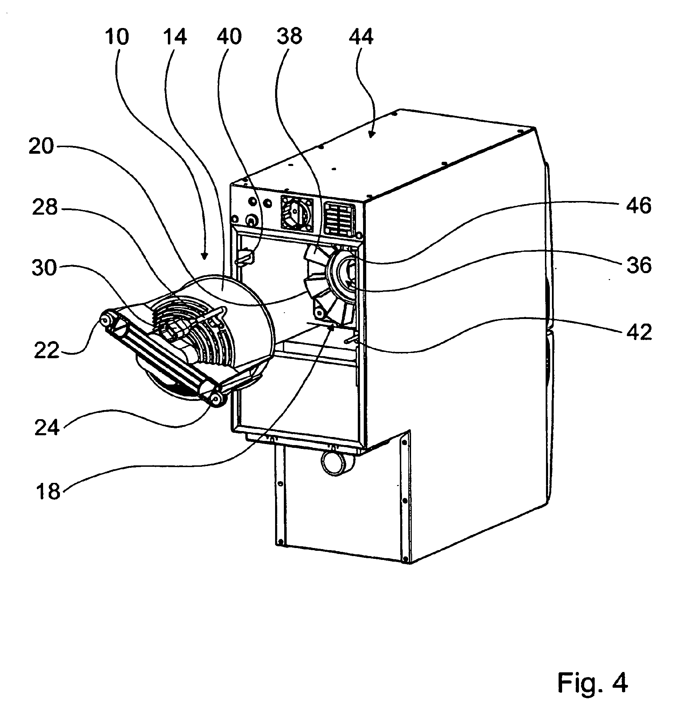

Die Motoreinheit 10 ist als eine von einem Endverbraucher austauschbare Einheit vorgesehen und weist hierfür ein Kunststoffgehäuse 14 und einen im Kunststoffgehäuse 14 angeordneten, von einem Kollektormotor gebildeten Elektromotor 16 auf (Figuren 3 und 4). Das Kunststoffgehäuse 14 bildet einen Berührschutz gemäß der DIN EN 61010-1.

Die Zahntechnikabsaugvorrichtung weist eine von einer Zwischengehäusebaueinheit gebildete Motorlagereinheit 18 mit einem Steckaufnahmebereich 20 auf, auf die die Motoreinheit 10 bei der Montage derselben mit ihrem Kunststoffgehäuse 14 aufgesteckt und damit zentriert wird. Die Motorlagereinheit 18 weist auf ihrer der Motoreinheit 10 zugewandten Seite sich ausgehend von einem Hauptströmungskanal 36 radial nach außen erstreckende, segmentförmige, gleichmäßig über den Umfang verteilte Ausformungen 38 auf, auf die die Motoreinheit 10 bei der Montage mit ihrem Kunststoffgehäuse 14 aufgesteckt wird und deren Außenumfangsflächen als Zentrierflächen dienen. Das Kunststoffgehäuse 14 ist hierfür auf der der Motorlagereinheit 18 zugewandten Seite im Wesentlichen zylinderförmig ausgebildet.

Ist die Motoreinheit 10 mit ihrem Kunststoffgehäuse 14 auf die Ausformungen 38 aufgesteckt, wird die Motoreinheit 10 mittels von Rändelmuttern gebildeten Befestigungsmitteln 22, 24, die zur werkzeuglosen Befestigung der Motoreinheit 10 vorgesehen sind, über Gewindebolzen 40, 42 an dem Vorrichtungsgehäuse 44 der Zahntechnikabsaugvorrichtung werkzeuglos befestigt. Anstatt Rändelmuttern sind jedoch auch andere, dem Fachmann als sinnvoll erscheinende werkzeuglose Befestigungsmittel denkbar, wie insbesondere Rastmittel und/oder Klemmmittel, Schnellspannverschlüsse usw.

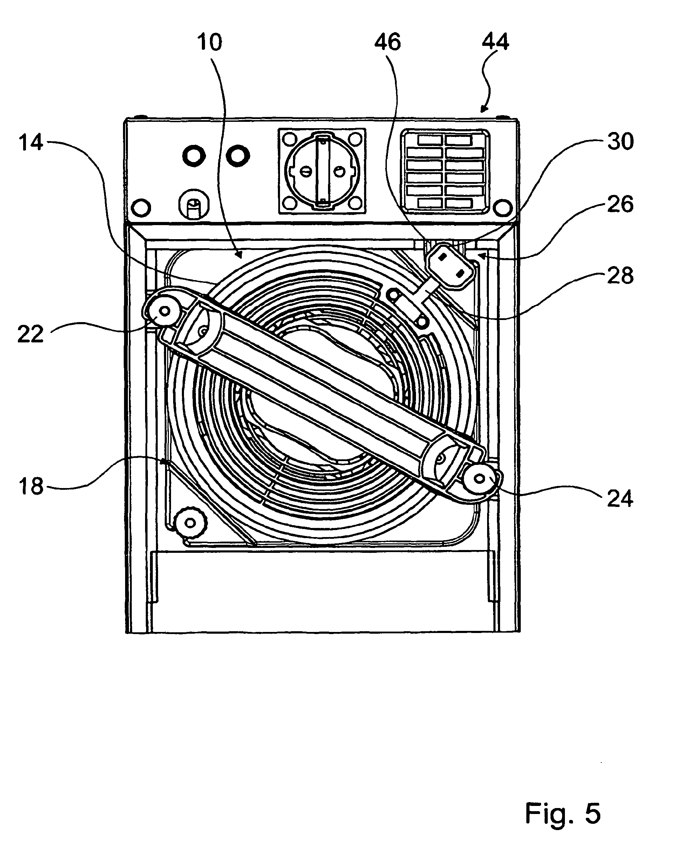

Ist die Motoreinheit 10 im Vorrichtungsgehäuse 44 befestigt, wird mittels einer einen Berührschutz gewährleistenden Steckverbindung 26 eine Energieversorgung der Motoreinheit 10 sichergestellt. Die Motoreinheit 10 weist hierfür ein einen Berührschutz gewährleistendes Elektrokabel 28 und ein daran befestigtes Steckmittel 30 der Steckverbindung 26 auf, das in ein am Vorrichtungsgehäuse 44 angeordnetes Steckmittel 46 eingesteckt wird (Figuren 4 und 5). Nachdem die Steckverbindung 26 hergestellt ist, wird das Vorrichtungsgehäuse 44 auf seiner Rückseite mit einem Deckel 34 verschlossen, der wiederum mit Befestigungsmitteln befestigt wird, die zur werkzeuglosen Befestigung vorgesehen sind.

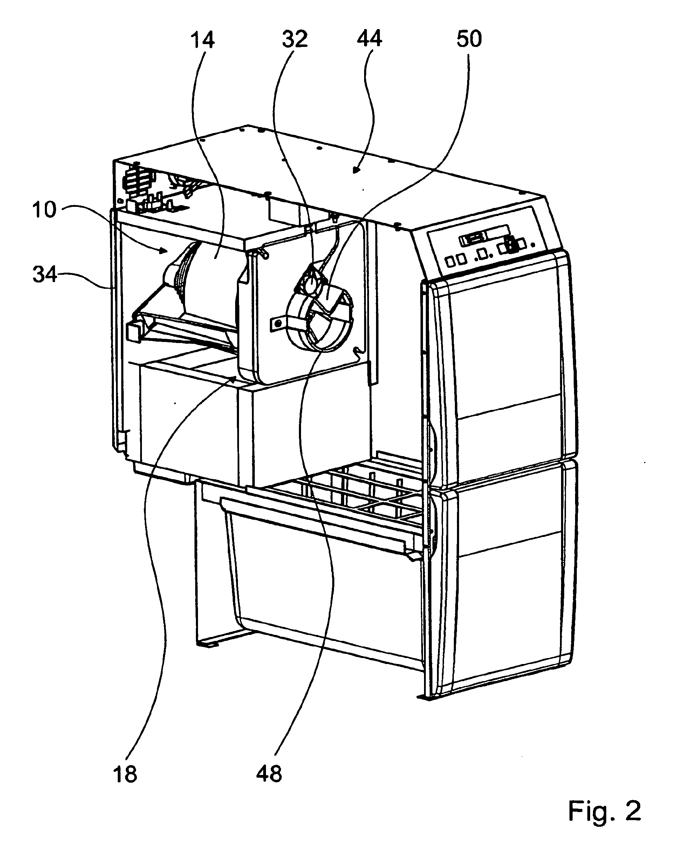

Die Motorlagereinheit 18 ist in axialer Richtung 60 zweiteilig ausgeführt und weist auf einer der Motoreinheit 10 abgewandten Seite einen Fortsatz 48 auf, der über einen ersten Winkelbereich einen im Wesentlichen ringsegmentförmigen Querschnitt und über einen zweiten Winkelbereich einen im Wesentlichen V-förmigen Querschnitt aufweist, und zwar, indem der Fortsatz 48 eine V-förmige Einbuchtung 50 aufweist (Figur 2).

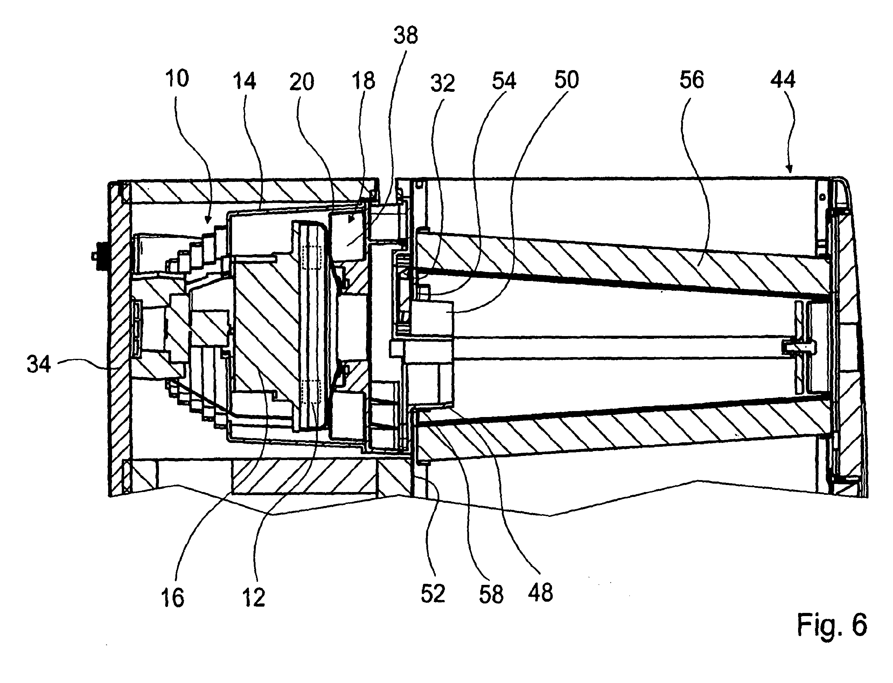

Der Fortsatz 48 ragt durch eine Blechwand 52 mit einer kreisrunden Ausnehmung 54. Hierbei ist zu bemerken, dass die Blechwand 52 in Figur 2 zur Veranschaulichung ausgeblendet ist, jedoch insbesondere in Figur 6 dargestellt ist. Auf einer der Motoreinheit 10 abgewandten Seite der Blechwand 52 ist auf den Fortsatz 48 ein Feinfilter 56 aufgesteckt, der mittels eines Zentrierbunds 58 auf dem Fortsatz 48 zentriert ist (Figur 6).

Die Zahntechnikabsaugvorrichtung weist eine einen Kleinlüfter 32 umfassende Strömungsmessvorrichtung auf, wobei der Kleinlüfter 32 zum Einsatz in einem PC vorgesehen ist bzw. aus dem PC-Anwendungsbereich stammt. Der Kleinlüfter 32 ist in der Motorlagereinheit 18 angeordnet, und zwar im Bereich der V-förmigen Einbuchtung 50. Der Kleinlüfter 32 wird teilweise von der Blechwand 52 abgedeckt und ragt teilweise in den Hauptströmungskanal 36, und zwar mit einer durch die V-förmige Einbuchtung 50 bestimmten Querschnittsfläche eines Kreissegments.

Der Kleinlüfter 32 ist während des Betriebs der Zahntechnikabsaugvorrichtung mittels seiner eigenen, von einem kleinen Elektromotor gebildeten Antriebseinheit angetrieben. Am Elektromotor des Kleinlüfters 32 wird zur Strömungsmessung ein Signal abgegriffen.

### Bezugszeichen

- 10: Motoreinheit
- 12: Saugmittel
- 14: Gehäuse
- 16: Elektromotor
- 18: Motorlagereinheit
- 20: Steckaufnahmebereich
- 22: Befestigungsmittel
- 24: Befestigungsmittel
- 26: Steckverbindung
- 28: Elektrokabel
- 30: Steckmittel
- 32: Kleinlüfter
- 34: Deckel
- 36: Hauptströmungskanal
- 38: Ausformung
- 40: Gewindebolzen
- 42: Gewindebolzen
- 44: Vorrichtungsgehäuse
- 46: Steckmittel
- 48: Fortsatz
- 50: Einbuchtung
- 52: Blechwand
- 54: Ausnehmung
- 56: Feinfilter
- 58: Zentrierbund
- 60: Richtung

## Patentansprüche

1. Zahntechnikabsaugvorrichtung wenigstens einer Motoreinheit (10) zum Antrieb eines Saugmittels (12), wobei die Motoreinheit (10) als eine von einem Endverbraucher austauschbare Einheit vorgesehen ist und wobei eine einen Berührschutz gewährleistende Steckverbindung (26) zur Energieversorgung der Motoreinheit (10) vorgesehen ist, wobei die Motoreinheit (10) ein einen Berührschutz gewährleistendes Elektrokabel (28) und ein daran befestigtes Steckmittel (30) der Steckverbindung (26) aufweist und wobei die Motoreinheit (10) ein Kunststoffgehäuse (14) und einen im Gehäuse (14) angeordneten Elektromotor (16) aufweist, und mit einer Motorlagereinheit (18) mit einem Steckaufnahmebereich (20) für die Motoreinheit, auf die die Motoreinheit (10) bei einer Montage mit dem Gehäuse (14) aufsteckbar ist und damit zentrierbar ist, **dadurch gekennzeichnet, dass** die Motorlagereinheit (18) auf ihrer der Motoreinheit (10) zugewandten Seite sich ausgehend von einem Hauptströmungskanal (36) radial nach außen erstreckende, segmentförmige, gleichmäßig über den Umfang verteilte Ausformungen (38) aufweist, auf die die Motoreinheit (10) mit ihrem Gehäuse (14) aufsteckbar ist und deren Außenumfangsflächen als Zentrierflächen ausgebildet sind.

2. Zahntechnikabsaugvorrichtung nach Anspruch 1,
**dadurch gekennzeichnet, dass** das Gehäuse (14) einen Berührschutz bildet.

3. Zahntechnikabsaugvorrichtung nach einem der vorhergehenden Ansprüche,
**dadurch gekennzeichnet, dass** die Motoreinheit (10) einen Kollektormotor aufweist.

4. Zahntechnikabsaugvorrichtung nach einem der vorhergehenden Ansprüche,
**gekennzeichnet durch** wenigstens ein Befestigungsmittel (22, 24), das zur werkzeuglosen Befestigung der Motoreinheit (10) vorgesehen ist.

5. Zahntechnikabsaugvorrichtung nach einem der vorhergehenden Ansprüche,
**dadurch gekennzeichnet, dass** in der Motoreinheit (10) das Saugmittel (12) integriert ist.

6. Zahntechnikabsaugvorrichtung nach einem der vorhergehenden Ansprüche,
**gekennzeichet durch** eine einen Kleinlüfter (32) umfassende Strömungsmessvorrichtung.

7. Zahntechnikabsaugvorrichtung nach Anspruch 6,
**dadurch gekennzeichnet, dass** der Kleinlüfter (32) ein PC-Kleinlüfter ist.

8. Zahntechnikabsaugvorrichtung nach Anspruch 6 oder 7,
**dadurch gekennzeichnet, dass** der Kleinlüfter (32) in zumindest einem Betriebsmodus angetrieben ist.

9. Zahntechnikabsaugvorrichtung nach einem der Ansprüche 6 bis 8,
**dadurch gekennzeichnet, dass** der Kleinlüfter (32) teilweise von einer Hauptströmung abgeschirmt ist.

10. Zahntechnikabsaugvorrichtung nach einem der Ansprüche 6 bis 9,
**dadurch gekennzeichnet, dass** der Kleinlüfter (32) in der Motorlagereinheit (18) angeordnet ist.

## Claims

1. Dental suction device with at least one motor unit (10) for driving a suction means (12), the motor unit (10) being provided as a unit that can be replaced by an end user, and a plug connection (26) that ensures protection against contact being provided to supply power to the motor unit (10), the motor unit (10) having an electric cable (28) which ensures protection against contact and to which a plug means (30) of the plug connection (26) is fixed, and the motor unit (10) having a plastic housing (14) and an electric motor (16) arranged in the housing (14), and with a motor bearing unit (18) having a plug-in area (20) for the motor unit, onto which the motor unit (10) can be plugged upon assembly with the housing (14) and can thus be centred, **characterized in that** the motor bearing unit (18), on its side directed towards the motor unit (10), has segment-shaped projections (38) which extend radially outwards starting from a main flow channel (36) and are distributed uniformly about the circumference and onto which the motor unit (10) can be plugged with its housing (14) and whose outer circumferential surfaces are designed as centring surfaces.

2. Dental suction device according to Claim 1, **characterized in that** the housing (14) forms a protection against contact.

3. Dental suction device according to one of the preceding claims, **characterized in that** the motor unit (10) has a collector motor.

4. Dental suction device according to one of the preceding claims, **characterized by** at least one fixing means (22, 24) which is provided for fixing the motor unit (10) without tools.

5. Dental suction device according to one of the preceding claims, **characterized in that** the suction means (12) is integrated in the motor unit (10).

6. Dental suction device according to one of the preceding claims, **characterized by** a flow measurement device comprising a small fan (32).

7. Dental suction device according to Claim 6, **characterized in that** the small fan (32) is a small fan for a PC.

8. Dental suction device according to Claim 6 or 7, **characterized in that** the small fan (32) is driven in at least one operating mode.

9. Dental suction device according to one of Claims 6 to 8, **characterized in that** the small fan (32) is partially screened off from a main flow.

10. Dental suction device according to one of Claims 6 to 9, **characterized in that** the small fan (32) is arranged in the motor bearing unit (18).

## Revendications

1. Dispositif d'aspiration dentaire comprenant au moins une unité de moteur (10) pour l'entraînement d'un moyen d'aspiration (12), l'unité de moteur (10) étant prévue sous forme d'unité remplaçable par un consommateur final et une connexion enfichable (26) garantissant une protection contre le contact étant prévue pour l'alimentation en énergie de l'unité de moteur (10), l'unité de moteur (10) présentant un câble électrique (28) garantissant une protection contre le contact et un moyen d'enfichage (30) de la connexion enfichable (26), fixé sur lui, et l'unité de moteur (10) présentant un boîtier en plastique (14) et un moteur électrique (16) disposé dans le boîtier (14), et avec une unité de palier de moteur (18) avec une zone de réception de fiche (20) pour l'unité de moteur, sur laquelle l'unité de moteur (10) peut être enfichée lors d'un montage avec le boîtier (14) et peut être centrée avec lui, **caractérisé en ce que** l'unité de palier de moteur (18) sur son côté tourné vers l'unité de moteur (10), présente des formations (38) s'étendant radialement vers l'extérieur depuis un canal d'écoulement principal (36), en forme de segments, réparties uniformément sur la périphérie, sur lesquelles l'unité de moteur (10) avec son boîtier (14) peut être enfichée et dont les surfaces périphériques extérieures sont réalisées sous forme de surfaces de centrage.

2. Dispositif d'aspiration dentaire selon la revendication 1, **caractérisé en ce que** le boîtier (14) forme une protection contre le contact.

3. Dispositif d'aspiration dentaire selon l'une quelconque des revendications précédentes, **caractérisé en ce que** l'unité de moteur (10) présente un moteur à collecteur.

4. Dispositif d'aspiration dentaire selon l'une quelconque des revendications précédentes, **caractérisé par** au moins un moyen de fixation (22, 24), qui est prévu pour la fixation sans outil de l'unité de moteur (10).

5. Dispositif d'aspiration dentaire selon l'une quelconque des revendications précédentes, **caractérisé en ce que** le moyen d'aspiration (12) est intégré dans l'unité de moteur (10).

6. Dispositif d'aspiration dentaire selon l'une quelconque des revendications précédentes, **caractérisé par** un dispositif de mesure d'écoulement comprenant un petit ventilateur (32).

7. Dispositif d'aspiration dentaire selon la revendication 6, **caractérisé en ce que** le petit ventilateur (32) est un petit ventilateur de PC.

8. Dispositif d'aspiration dentaire selon la revendication 6 ou 7, **caractérisé en ce que** le petit ventilateur (32) est entraîné dans au moins un mode de fonctionnement.

9. Dispositif d'aspiration dentaire selon l'une quelconque des revendications 6 à 8, **caractérisé en ce que** le petit ventilateur (32) est en partie protégé contre un écoulement principal.

10. Dispositif d'aspiration dentaire selon l'une quelconque des revendications 6 à 9,
**caractérisé en ce que** le petit ventilateur (32) est disposé dans l'unité de palier de moteur (18).
